# EUROPÄISCHE PATENTSCHRIFT

(11) **EP 2 851 596 B1**
(45) Veröffentlichungstag und Bekanntmachung des Hinweises auf die Patenterteilung: **14.03.2018**
(21) Anmeldenummer: 14170162.3
(22) Anmeldetag: 28.05.2014
(51) Int. Cl.: F16L 5/00, F16L 37/00, F16L 5/02, F16L 37/252, F16L 41/08

(54) **Wanddurchführungselement für eine Fluidleitung und Wanddurchführung**
Wall feedthrough element for a fluid line and wall feedthrough
Élément de traversée murale pour une conduite de fluide et traversée murale

(30) Priorität: 13.08.2013 DE 102013215955
(43) Veröffentlichungstag der Anmeldung: 25.03.2015
(73) Patentinhaber: NORMA Germany GmbH, 63477 Maintal (DE)
(72) Erfinder: Bauer, Andreas, 63785 Obernburg (DE)
(74) Vertreter: Patentanwälte Olbricht Buchhold Keulertz

(56) Entgegenhaltungen:
- DE-U1-202008 005 929
- US-A- 255 523
- US-A- 815 627
- US-A- 2 954 248
- US-A- 3 079 178
- US-A- 3 415 549
- US-A1- 2004 166 708
- US-B1- 6 709 280

## Beschreibung

Die Erfindung betrifft eine Wanddurchführung mit einem Wanddurchführungselement und einer Wand, die eine Durchgangsöffnung aufweist.
In manchen Fällen muss man ein Fluid durch eine Wand hindurchführen können. Ein Beispiel hierfür ist ein Tank oder ein Behälter, aus dem Flüssigkeit entnommen werden soll. Zu diesem Zweck verwendet man eine Durchgangsöffnung in der Wand des Tanks oder des Behälters. Durch diese Durchgangsöffnung wird das Wanddurchführungselement mit dem Durchsteckbereich hindurchgeführt. In einem bekannten Fall weist der Durchsteckbereich ein Außengewinde als Befestigungsgeometrie auf. Auf dieses Außengewinde wird eine Mutter aufgeschraubt und solange angezogen, bis der Anschlag auf der anderen Seite der Wand an der Wand anliegt. Der Bereich des Durchsteckbereichs zwischen der Mutter und dem Anschlag, der von der Wand umgeben ist, wird auch als "Lagerabschnitt" bezeichnet, weil der Durchsteckbereich in der Regel hier mit der Wand Kontakt hat.

Ein derartiges Wanddurchführungselement benötigt zu der Montage einen Zugriff von zwei Seiten der Wand. Der Zugriff auf der einen Seite der Wand ist notwendig, um das Wanddurchführungselement durch die Durchgangsöffnung hindurchstecken zu können. Der Zugriff auf der anderen Seite der Wand ist notwendig, um die Mutter auf das Außengewinde aufschrauben zu können. Die Montage erfordert relativ viel Zeit.

Das Dokument US2004/0166708 A1 beschreibt eine herkömmliche Wanddurchführung.

Der Erfindung liegt die Aufgabe zugrunde, eine einfach zu montierende Wanddurchführung anzugeben. Die Aufgabe wird durch eine Wanddurchführung gemäß Anspruchs 1 gelöst, wobei die Wanddurchführung mit einem Wanddurchführungselement, und einer Wand, die eine Durchgangsöffnung aufweist, die eine an die Ausformung angepasste Innenkontur aufweist. Das Wanddurchführungselement weist eine Befestigungsgeometrie auf, die einer vom Anschlag abgewandten Seite des Lagerabschnitts mindestens eine radial über den Lagerabschnitt vorstehende Ausformung mit einer dem Anschlag zugewandten Rückwand und mindestens einen radial federnden Vorsprung aufweist, der gegenüber der Ausformung in Umfangsrichtung versetzt ist und in Axialrichtung gegenüber der Rückwand in Richtung auf den Anschlag vorsteht.
Mit einem derartigen Wanddurchführungselement wird die Herstellung einer Wanddurchführung stark vereinfacht. Es ist lediglich erforderlich, in der Wand eine Durchgangsbohrung vorzusehen, deren Innenkontur der Außenkontur der Befestigungsgeometrie im Bereich des Anschlags oder der Anschläge angepasst ist. In diesem Fall ist es möglich, das Wanddurchführungselement mit dem Durchsteckbereich durch die Durchgangsöffnung in der Wand hindurchzustecken. Die Ausformung oder die Ausformungen können durch entsprechende Bereiche am Umfang der Durchgangsöffnung in der Wand hindurchtreten. Der Durchsteckbereich wird soweit durch die Durchgangsöffnung in der Wand hindurchgesteckt, dass sich der Lagerabschnitt innerhalb der Wand befindet. Da sich die Ausformung auf der dem Anschlag abgewandten Seite des Lagerabschnitts befindet, kann das Wanddurchführungselement nun in der Durchgangsöffnung verdreht werden, so dass die Ausformung in einen Bereich der Wand kommt, in dem eine Bewegung des Wanddurchführungselements aus der Durchgangsöffnung heraus, also umgekehrt zur Einsteckrichtung, nicht mehr möglich ist. Eine derartige Bewegung wird dadurch unterbunden, dass die Rückwand an der Wand anschlägt. Wenn man das Wanddurchführungselement weit genug dreht, dann gelangt der federnde Vorsprung in den Bereich der Ausformung, durch den die Ausformung zuvor geführt worden ist. Hier kann der federnde Vorsprung radial nach außen federn und in die Ausnehmung eintreten. Dies ist möglich, weil der Vorsprung gegenüber der Rückwand der Ausnehmung in Richtung auf den Anschlag vorsteht und somit in den Lagerabschnitt hineinragt. Sobald der federnde Vorsprung in die Ausnehmung in der Innenkontur der Durchgangsöffnung eingerastet ist, ist ein Verdrehen des Wanddurchführungselements nicht mehr möglich. Da ein Verdrehen nicht mehr möglich ist, kann das Wanddurchführungselement auch keine Position einnehmen, in der die Ausformung wieder einer Ausnehmung in der Innenkontur der Durchgangsöffnung gegenübersteht, so dass das Wanddurchführungselement herausgezogen werden könnte. Das Wanddurchführungselement lässt sich also von einer Seite der Wand aus montieren und zwar einfach durch einen Durchsteckvorgang, auf den eine Drehbewegung folgt. Eine derartige Montage lässt sich in einer wesentlich kürzeren Zeit vornehmen als das Aufschrauben einer Mutter auf ein Außengewinde. In Umfangsrichtung sind mehrere Ausformungen vorgesehen, wobei zwischen mindestens zwei Ausformungen ein federnder Vorsprung angeordnet ist. Wenn mehrere Ausformungen vorgesehen sind, dann lässt sich ein Kippen des Wanddurchführungselements in der Wand vermeiden. Günstig ist es hierbei, wenn mindestens zwei, vorzugsweise drei oder vier Ausformungen vorgesehen sind, die in Umfangsrichtung beispielsweise gleichförmig verteilt sind. Dementsprechend weist die Innenkontur der Durchgangsöffnung auch eine entsprechend große Anzahl von Ausnehmungen auf.
Vorzugsweise weist der Lagerabschnitt einen kreisförmigen Querschnitt auf. Dies ist insbesondere dann günstig, wenn die Innenkontur der Durchgangsöffnung ebenfalls zumindest abschnittsweise kreisförmig ausgestaltet ist. In diesem Fall kann der Lagerabschnitt innerhalb der Durchgangsöffnung bei einer Drehbewegung gleiten. Der Lagerabschnitt kann das Wanddurchführungselement in der Durchgangsöffnung abstützen.

Vorzugsweise weist der Vorsprung auf seiner vom Anschlag abgewandten Seite eine Anlaufschräge auf. Wenn das Wanddurchführungselement in die Durchgangsöffnung in der Wand eingesteckt wird, dann ermöglicht es die Anlaufschräge, dass der federnde Vorsprung soweit radial nach innen gedrückt wird, dass er vollständig in der Durchgangsöffnung aufgenommen ist. Durch die Schräge wird die zum Einführen des Wanddurchführungselements in die Durchgangsöffnung der Wand in eine radial auf den federnden Vorsprung wirkende Kraft umgesetzt.
Vorzugsweise erstreckt sich der Vorsprung in unbelastetem Zustand radial mindestens so weit wie die Ausformung. Damit wird mit hoher Zuverlässigkeit erreicht, dass der Vorsprung sehr weit radial nach außen federn kann und somit einen relativ großen Widerstand gegen ein Verdrehen des Wanddurchführungselements in der Wand bildet. Die Ausnehmung in der Innenkontur der Wand ist in der Regel nur geringfügig größer als die radiale Erstreckung der Ausformung. Dementsprechend kann man dafür sorgen, dass der Vorsprung, wenn er radial nach außen federn kann, die Ausnehmung in Radialrichtung praktisch ausfüllt.

Vorzugsweise weist das Gehäuse einen Innenteil und einen Außenteil auf, wobei der Innenteil einen Fluidkanal und Anschlussgeometrien für den Fluidkanal und der Außenteil die Befestigungsgeometrie aufweist. In diesem Fall ist man beim Aufbau des Wanddurchführungselements relativ flexibel. In vielen Fällen ist es wünschenswert, beispielsweise unterschiedliche Anschlussgeometrien für den Fluidkanal zur Verfügung zu haben. Hierfür kann man dann unterschiedliche Innenteile verwenden. Das Außenteil mit der Befestigungsgeometrie kann jedoch für die unterschiedlichen Innenteile gleich gehalten werden, so dass man die Kosten für Werkzeuge klein halten kann.

Vorzugsweise sind der Innenteil und der Außenteil durch eine Rastverbindung miteinander verbunden. Dies erleichtert die Montage. Der Innenteil muss einfach in den Außenteil hineingesteckt werden, wobei Teile der Rastverbindung ineinander einrasten. Werkzeuge oder Fügeelemente sind nicht erforderlich.

Vorzugsweise sind der Innenteil und der Außenteil drehfest miteinander verbunden. In manchen Fällen ist es wünschenswert, wenn die Anschlussgeometrien des Fluidkanals eine bestimmte Ausrichtung haben. Diese Ausrichtung kann durch die Anordnung des Innenteils im Außenteil festgelegt werden. Da das Wanddurchführungselement nach erfolgter Montage drehfest in der Wand befestigt ist, wie oben beschrieben, lässt sich durch eine drehfeste Verbindung zwischen dem Innenteil und dem Außenteil die gewünschte Ausrichtung der Anschlussgeometrien des Fluidkanals sicherstellen.
Vorzugsweise ist der Anschlag am Innenteil angeordnet. Dies vereinfacht den Aufbau. Die Werkzeuge zum Herstellen von Innenteil und Außenteil können dadurch ebenfalls relativ einfach aufgebaut werden, was Kosten spart.

Wie oben beschrieben, lässt sich eine derartige Wanddurchführung relativ einfach herstellen. Man benötigt lediglich eine Durchgangsöffnung, die für jede Ausformung am Wanddurchführungselement mindestens eine Ausnehmung in ihrer Innenkontur aufweist. Man kann dann das Wanddurchführungselement mit seinem Durchsteckbereich in die Durchgangsöffnung einstecken. Die Ausformung oder die Ausformungen treten dann durch die Ausnehmung oder die Ausnehmungen und zwar solange, bis sie auf der gegenüberliegenden Seite der Wand von der Wand freikommen. Wenn dann das Wanddurchführungselement in der Durchgangsöffnung verdreht wird, gelangt der federnde Vorsprung in den Bereich der Ausnehmung und kann dann radial nach außen federn, so dass eine weitere Drehung verhindert wird. Dadurch wird automatisch verhindert, dass die Ausformung oder die Ausformungen wieder mit der Ausnehmung oder Ausnehmungen zur Überdeckung gebracht werden können. Vorzugsweise folgt die Innenkontur zumindest abschnittsweise einer Kreislinie, wobei die Kreislinie einen Durchmesser aufweist, der an einen Durchmesser des Lagerabschnitts angepasst ist. In diesem Fall kann man den Lagerabschnitt in der Durchgangsöffnung verdrehen, wobei die Position des Wanddurchführungselements praktisch festgelegt ist. Eine Verschiebung senkrecht zum Durchsteckbereich ist praktisch nicht möglich. Möglich ist lediglich eine Verdrehung des Wanddurchführungselements relativ zur Wand. Die Kreislinie ist natürlich dort unterbrochen, wo Ausnehmungen vorgesehen sind, durch die die Ausformungen treten können. Zwischen dem Anschlag und der Wand ist eine Dichtung angeordnet. Diese Dichtung hat die Aufgabe, die Wand im Bereich des Wanddurchführungselements abzudichten. Die Dichtung ist aus einem elastomeren Material gebildet. Dementsprechend übt die Dichtung auch eine gewisse Federwirkung aus und drückt den Anschlag von der Wand weg, so dass die Rückwand der Ausformung an die vom Anschlag abgewandte Seite der Wand gezogen wird. Dadurch wird das Wanddurchführungselement in Durchsteckrichtung praktisch spielfrei in der Wand gehalten.
Die Erfindung wird im Folgenden anhand eines bevorzugten Ausführungsbeispiels in Verbindung mit der Zeichnung beschrieben. Hierin zeigen:
- Fig. 1: eine stirnseitige Ansicht auf eine Wanddurchführung und
- Fig. 2: einen Schnitt II-II nach Fig. 1.
Eine Wanddurchführung 1 weist ein Wanddurchführungselement 2 und eine Wand 3 auf. Die Wand 3 ist beispielsweise die Wand eines Behälters oder eines Tanks, aus dem ein Fluid nach außen geleitet werden soll.
Die Wand 3 ist zur Aufnahme des Wanddurchführungselements 2 mit einer Durchgangsöffnung 4 versehen. Die Durchgangsöffnung 4 weist als

Innenkontur im Wesentlichen eine Kreislinie auf, von der sich allerdings vier Ausnehmungen 5 radial nach außen erstrecken. Anstelle von vier Ausnehmungen 5 kann auch eine andere Zahl von Ausnehmungen 5 vorgesehen sein, beispielsweise 3, 5, 6, 7 oder 8 Ausnehmungen 5. Die Ausnehmungen 5 sind in Umfangsrichtung der Durchgangsöffnung 4 gleichförmig verteilt. Sie haben im Wesentlichen eine Rechteckform, können allerdings auch die Form eines Trapezes aufweisen.

Das Wanddurchführungselement weist ein aus einem Innenteil 6 und einem Außenteil 7 gebildetes Gehäuse auf. Das Gehäuse weist einen Anschlag 8 auf, der im vorliegenden Ausführungsbeispiel am Innenteil 6 angeordnet und einstückig mit dem Innenteil 6 ausgebildet ist. Ferner weist das Gehäuse am Außenteil 7 einen Durchsteckbereich 9 mit einer Befestigungsgeometrie auf, die nachfolgend erläutert wird. Zur Montage des Wanddurchführungselements 2 wird das Gehäuse mit dem Durchsteckbereich 9 durch die Durchgangsöffnung 4 hindurchgeführt.

Zwischen dem Anschlag 8 und der Wand 3 ist eine Dichtung 10 angeordnet, die im vorliegenden Fall als Dichtungsring aus einem elastomeren Material gebildet ist.

Der Außenteil 7 weist einen Lagerabschnitt 11 auf, der bei montiertem Wanddurchführungselement 2 innerhalb der Durchgangsöffnung 4 angeordnet ist. Der Lagerabschnitt 11 hat im Wesentlichen eine kreislinienförmige Außenkontur. Der Durchmesser dieser Außenkontur ist dem Innendurchmesser der Durchgangsöffnung 4 angepasst. Ein kleines Spiel ist zulässig.

Das Gehäuse weist am Außenteil 7 in Umfangsrichtung verteilt mehrere Ausformungen 12 auf, die beispielsweise als etwa rechteckförmige Vorsprünge ausgebildet sein können. Andere Formen sind ebenfalls möglich.

Jede Ausformung 12 weist an ihrer dem Anschlag 8 zugewandten Seite eine Rückwand 13 auf. Die Rückwand 13 bildet sozusagen die Grenze des Lagerabschnitts 11. Mit anderen Worten ist die Ausformung auf der vom Anschlag 8 abgewandten Seite des Lagerabschnitts 11 angeordnet. Im vorliegenden Fall sind vier Ausformungen 12 vorgesehen. Die Anzahl der Ausformungen 12 und die Anzahl der Ausnehmungen 5 stimmen überein.

Die Ausformungen 12 können an ihrer vom Anschlag 8 abgewandten Seite eine Anlaufschräge 14 aufweisen.

In Umfangsrichtung verteilt zwischen den Ausformungen 12 sind vier Vorsprünge 15 angeordnet. Jeder Vorsprung ist an der Spitze eines Steges 16 gelagert, der mit dem Außenteil 7 verbunden ist. Der Steg 16 bildet eine Art Feder, so dass die Vorsprünge 15 in radialer Richtung federnd gelagert sind.

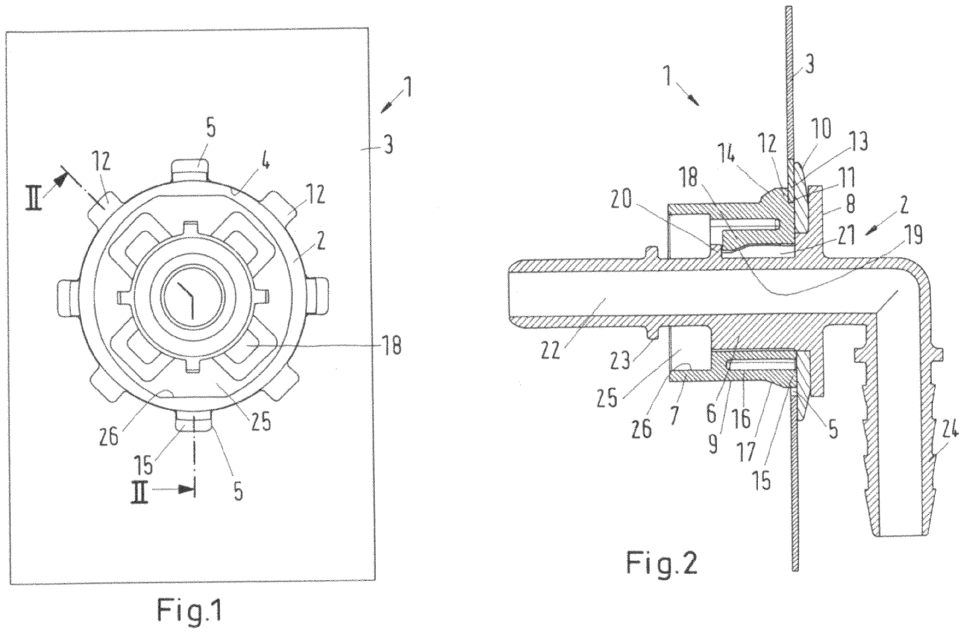

Wie insbesondere in Fig. 2 zu erkennen ist, steht der Vorsprung 15 in Axialrichtung gegenüber der Rückwand 13 in Richtung auf den Anschlag 8 vor. Auch der Vorsprung 15 weist auf der vom Anschlag 8 abgewandten Seite eine Anlaufschräge 17 auf.

Der Innenteil 6 und der Außenteil 7 sind über eine Rastverbindung miteinander verbunden. Zu diesem Zweck weist der Außenteil 7 in seinem Inneren eine Anzahl von Rastfingern 18 auf, die in Umfangsrichtung gleichmäßig verteilt sind. Jeder Rastfinger weist eine Anlaufschräge 19 auf. Wenn der Innenteil 6 in dem Außenteil 7 eingeschoben wird (bezogen auf die Darstellung der Fig. 2 erfolgt diese Bewegung des Innenteils 6 gegenüber dem Außenteil 7 von rechts nach links), dann rastet der Rastfinger 18 hinter einem umlaufenden Vorsprung 20 am Innenteil 6 ein. Für jeden Rastfinger 18 ist eine Aufnahmekammer 21 vorgesehen, wobei die Aufnahmekammern 21 in Umfangsrichtung Begrenzungswände aufweisen. Dementsprechend verhindert der eingerastete Rastfinger 18 nicht nur eine Bewegung zwischen dem Innenteil 6 und dem Außenteil 7 in die Einsteckrichtung, die im Folgenden auch als "Axialrichtung" bezeichnet wird, sondern auch eine Drehbewegung zwischen dem Innenteil 6 und dem Außenteil 7.

Der Innenteil 6 weist einen Fluidkanal 22 auf. Ferner weist der Innenteil 6 für jedes Ende des Fluidkanals eine Anschlussgeometrie 23, 24 auf. Die dargestellten Anschlussgeometrien 23, 24 sind lediglich beispielhaft zu verstehen. Auch die Verwendung von anderen Anschlussgeometrien ist möglich.

Die Montage der Wanddurchführung ist relativ einfach. Sie kann von einer Seite der Wand 3 aus erfolgen. Dies ist, bezogen auf die Darstellung der Fig. 2, im vorliegenden Ausführungsbeispiel die rechte Seite.

Das Wanddurchführungselement 2 ist vor der Montage in der Wand 3 bereits mit der Dichtung 10 versehen. Die Dichtung 10 kann montiert werden, wenn der Innenteil 6 und der Außenteil 7 zusammengesteckt und miteinander verrastet werden.

Das Wanddurchführungselement 2 wird mit seinem Durchsteckbereich 9 durch die Durchgangsöffnung 4 hindurchgeführt. Dabei treten die Ausformungen 12 durch die Ausnehmungen 5 in der Umfangskontur der Durchgangsöffnung 4. Natürlich ist eine entsprechende Ausrichtung des Wanddurchführungselements gegenüber den Ausnehmungen 5 erforderlich.

Während die Ausformungen 12 durch die Ausnehmungen 5 ohne weiteres hindurchtreten können, steht für die Vorsprünge 15 kein entsprechender Durchtritt zur Verfügung. Sie werden daher radial nach innen gedrückt, wozu die Anlaufschräge 17 hilfreich ist und federn soweit radial nach innen, dass sie auch außerhalb der Ausnehmungen 5 in die Durchgangsöffnung 4 eintreten können.

Die Einsteckbewegung des Wanddurchführungselements 2 in die Wand 3 wird solange fortgesetzt, bis die Dichtung 10 an der Wand 3 anliegt und durch den Anschlag 8 etwas komprimiert wird. Die Dichtung 10 wird soweit zusammengedrückt, dass die Ausformungen 12 mit ihrer Rückwand 13 von der Wand 3 freikommen oder nur unter geringer Spannung an der Wand 3 auf der dem Anschlag 8 abgewandten Seite anliegen. In diesem Zustand ist eine Drehung des Wanddurchführungselements 2 gegenüber der Wand 3 möglich. Bei dieser Drehung wird der Lagerabschnitt 11 von der Durchgangsöffnung 4 getragen, so dass ausschließlich eine Drehbewegung erfolgt, jedoch keine Verschiebung parallel zur Wand 3.

Die Drehbewegung des Wanddurchführungselements 2 wird solange fortgesetzt, bis die federnden Vorsprünge 15 in den Ausnehmungen 5 der Durchgangsöffnung 4 einrasten können. Da die Vorsprünge 15 radial nach außen federn, ist ein derartiges Einrasten problemlos möglich und für einen Monteur auch hörbar.

Sobald die Vorsprünge 15 in die Ausnehmungen 5 eingerastet sind, ist die Montage beendet. Die Dichtung 10 kann sich entspannen und zieht die Rückwand 13 der Ausformungen 12 gegen die Wand 3. Die Dichtung 10 bleibt dabei etwas komprimiert, so dass sie ihre Dichtfunktion gut erfüllen kann.

Das Einrasten der federnden Vorsprünge 15 in die Ausnehmungen 5 ist möglich, weil die Vorsprünge 15 über die Rückwand 13 der Ausformungen 12 in Richtung auf den Anschlag 8 vorstehen. Auch wenn die Ausformungen 12 vollständig durch die Wand 3 hindurchgetreten sind, befinden sich die federnden Vorsprünge 15 immer noch innerhalb der Wand 3. Eine Bewegung der Vorsprünge 15 aus der Durchgangsöffnung 4 heraus wird durch das Zusammenwirken von Anschlag 8 und Dichtung 10 verhindert.

Wie in Fig. 1 zu erkennen ist, ragen die Ausformungen 12 und die Vorsprünge 15 in radialer Richtung etwa gleich weit nach außen.

Das Gehäuse weist zwischen dem Innenteil 6 und dem Außenteil 7 eine Einstecköffnung 25 auf, in die ein Kupplungselement eingesteckt werden kann, um eine Verbindung zwischen einer Fluidleitung (nicht dargestellt) und dem Fluidkanal 22 herzustellen. Im vorliegenden Ausführungsbeispiel weist die Einstecköffnung 25 eine Drehmomentangriffsfläche 26 auf, die beispielsweise als Abflachung einer Kreisform ausgebildet ist. Natürlich sind auch andere Drehmomentangriffsflächen möglich, beispielsweise die Verwendung eines Polygons. Wenn ein entsprechend angepasstes Kupplungselement verwendet wird, dann ist das Kupplungselement drehfest gegenüber dem Wanddurchführungselement 2 gehalten, so dass nicht nur eine Drehposition des Wanddurchführungselements 2 gegenüber der Wand 3 relativ genau definiert werden kann, sondern auch eine Winkelposition einer an das Wanddurchführungselement 2 angeschlossenen Leitung.

Die Ausbildung des Gehäuses mit einem Innenteil 6 und einem Außenteil 7 hat herstellungstechnische Vorteile. Die zur Herstellung des Gehäuses verwendeten Werkzeuge, vorzugsweise Spritzgusswerkzeuge, können relativ einfach gehalten werden. Es ist aber auch möglich, das Gehäuse einstückig auszubilden oder den Innenteil 6 und den Außenteil 7 auf andere Weise miteinander zu verbinden, beispielsweise durch Kleben oder Schweißen.

## Patentansprüche

1. Wanddurchführung (1) mit einer Wand und einem Wanddurchführungselement (2) für eine Fluidleitung, wobei das Wanddurchführungselement (2) mit einem Gehäuse vorgesehen ist, das einen in Axialrichtung verlaufenden Durchsteckbereich (9) mit einer Befestigungsgeometrie und einen Anschlag (8) aufweist, wobei der Durchsteckbereich (9) einen Lagerabschnitt (11) aufweist und wobei die Befestigungsgeometrie auf einer vom Anschlag (8) abgewandten Seite des Lagerabschnitts (11) mehrere radial über den Lagerabschnitt (11) vorstehenden Ausformungen (12) mit einer dem Anschlag (8) zugewandten Rückwand (13) und mindestens einen radial federnden Vorsprung (15) aufweist, der gegenüber den Ausformungen (12) in Umfangsrichtung versetzt ist, wobei zwischen mindestens zwei Ausformungen (12) ein federnder Vorsprung (15) angeordnet ist, wobei der radial federnde Vorsprung (15) in Axialrichtung gegenüber der Rückwand (13) in Richtung auf den Anschlag (8) vorsteht, **dadurch gekennzeichnet**
**dass** die Wand (3), eine Durchgangsöffnung (4) aufweist, die eine an die Ausformungen (12) angepasste Innenkontur aufweist, wobei zwischen dem Anschlag (8) und der Wand (3) eine Dichtung (10) angeordnet ist.

2. Wanddurchführung (1) nach Anspruch 1, **dadurch gekennzeichnet, dass** der Lagerabschnitt (11) des Wanddurchführungselements (2) einen kreisförmigen Querschnitt aufweist.

3. Wanddurchführung (1) nach einem der Ansprüche 1 bis 2, **dadurch gekennzeichnet, dass** der Vorsprung (15) des Wanddurchführungselements (2) auf seiner vom Anschlag abgewandten Seite eine Anlaufschräge (17) aufweist.

4. Wanddurchführung (1) nach einem der Ansprüche 1 bis 3, **dadurch gekennzeichnet, dass** das sich der Vorsprung (15) des Wanddurchführungselements (2) in unbelastetem Zustand radial mindestens so weit erstreckt, wie die Ausformung (12).

5. Wanddurchführung (1) nach einem der Ansprüche 1 bis 4, **dadurch gekennzeichnet, dass** das Gehäuse des Wanddurchführungselements (2) einen eine Fluidkanalmündung umgebende Einstecköffnung (25) aufweist.

6. Wanddurchführung (1) nach Anspruch 5, **dadurch gekennzeichnet, dass** die Einstecköffnung (25) des Wanddurchführungselements (2) eine Drehmomentangriffsfläche (26) aufweist.

7. Wanddurchführung (1) nach einem der Ansprüche 1 bis 5, **dadurch gekennzeichnet, dass** das Gehäuse des Wanddurchführungselements (2) einen Innenteil (6) und einen Außenteil (7) aufweist, wobei der Innenteil (6) einen Fluidkanal (22) und Anschlussgeometrien (23, 24) für den Fluidkanal und der Außenteil (7) die Befestigungsgeometrie aufweist.

8. Wanddurchführung (1) nach Anspruch 7, **dadurch gekennzeichnet, dass** der Innenteil (6) und der Außenteil (7) des Wanddurchführungselements (2) durch eine Rastverbindung (18, 20) miteinander verbunden sind.

9. Wanddurchführung (1) nach Anspruch 7 oder 8, **dadurch gekennzeichnet, dass** der Innenteil (6) und der Außenteil (7) des Wanddurchführungselements (2) drehfest miteinander verbunden sind.

10. Wanddurchführung (1) nach einem der Ansprüche 7 bis 9, **dadurch gekennzeichnet, dass** der Anschlag (8) des Wanddurchführungselements (2) am Innenteil (6) angeordnet ist.

11. Wanddurchführung (1) nach Anspruch 1, **dadurch gekennzeichnet, dass** die Innenkontur zumindest abschnittsweise einer Kreislinie folgt, wobei die Kreislinie einen Durchmesser aufweist, der an einen Durchmesser des Lagerabschnitts (11) angepasst ist.

## Claims

1. Wall duct (1) having a wall and a wall duct element (2) for a fluid line, wherein the wall duct element (2) is provided with a housing, which has a piercing region (9) running in an axial direction having a fastening geometry and a stop (8), wherein the piercing region (9) has a bearing section (11) and wherein, on a side of the bearing section (11) facing away from the stop (8), the fastening geometry has several formations (12) protruding over the bearing section (11) and having a rear wall (13) facing towards the stop (8), and at least one radially sprung projection (15), which is displaced in the peripheral direction with respect to the formations (12), wherein a sprung projection (15) is arranged between at least two formations (12), wherein the radially sprung projection (15) protrudes in an axial direction with respect to the rear wall (13) in the direction of the stop (8), **characterised in that** the wall (3) has a passage opening (4) which has an inner contour adapted to the formations (12), wherein a seal (10) is arranged between the stop (8) and the wall (3).

2. Wall duct (1) according to claim 1, **characterised in that** the bearing section (11) of the wall duct element (2) has a circular cross-section.

3. Wall duct (1) according to any one of claims 1 to 2, **characterised in that** the projection (15) of the wall duct element (2) has an inclined panel (17) on its side facing away from the stop.

4. Wall duct (1) according to any one of claims 1 to 3, **characterised in that**, in the unloaded state, the projection (15) of the wall duct element (2) extends radially at least as far as the formation (12).

5. Wall duct (1) according to any one of claims 1 to 4, **characterised in that** the housing of the wall duct element (2) has an insert opening (25) surrounding a fluid channel opening.

6. Wall duct (1) according to claim 5, **characterised in that** the insert opening (25) of the wall duct element (2) has a torque contact surface (26).

7. Wall duct (1) according to any one of claims 1 to 5, **characterised in that** the housing of the wall duct element (2) has an inner part (6) and an outer part (7), wherein the inner part (6) has a fluid channel (22) and connection geometries (23, 24) for the fluid channel and the outer part (7) has the fastening geometry.

8. Wall duct (1) according to claim 7, **characterised in that** the inner part (6) and the outer part (7) of the wall duct element (2) are connected to each other by a latching connection (18, 20).

9. Wall duct (1) according to claim 7 or 8, **characterised in that** the inner part (6) and the outer part (7) of the wall duct element (2) are connected to each other in a non-rotatable manner.

10. Wall duct (1) according to any one of claims 7 to 9, **characterised in that** the stop (8) of the wall duct element (2) is arranged on the inner part (6).

11. Wall duct (1) according to claim 1, **characterised in that** the inner contour follows a circumference of a circle at least in sections, wherein the circumference of the circle has a diameter which is adapted to a diameter of the bearing section (11).

## Revendications

1. Traversée murale (1) avec un mur et avec un élément de traversée murale (2) destiné à une conduite de fluide, dans laquelle l'élément de traversée murale (2) est prévu avec un corps qui comporte une zone de traversée (9), qui s'étend en direction axiale et qui a une géométrie de fixation, et une butée (8), dans laquelle la zone de traversée (9) comporte un tronçon formant support (11), dans laquelle la géométrie de fixation comporte sur un côté, opposé à la butée (8), du tronçon formant support (11) plusieurs déformations (12) dépassant de façon radiale au-delà du tronçon formant support (11) avec une paroi arrière (13) proche de la butée (8) et au moins une partie en saillie (15) qui a un effet élastique radial et qui peut être déplacée dans la direction circonférentielle par rapport aux déformations (12), dans laquelle une partie en saillie (15) formant ressort est agencée entre au moins deux déformations (12) et dans laquelle la partie en saillie (15) ayant un effet élastique radial dépasse dans la direction axiale par rapport à la paroi arrière (13) en direction de la butée (8), **caractérisée en ce que** le mur (3) comporte une ouverture de passage (4) qui présente un contour intérieur adapté aux déformations (12), un joint d'étanchéité (10) étant agencé entre la butée (8) et le mur (3).

2. Traversée murale (1) selon la revendication 1, **caractérisée en ce que** le tronçon formant support (11) de l'élément de traversée murale (2) présente une section transversale circulaire.

3. Traversée murale (1) selon l'une quelconque des revendications 1 à 2, **caractérisée en ce que** la partie en saillie (15) de l'élément de traversée murale (2) présente un biseau d'entrée (17) sur son côté éloigné de la butée.

4. Traversée murale (1) selon l'une quelconque des revendications 1 à 3, **caractérisée en ce que** la partie en saillie (15) de l'élément de traversée murale (2) s'étend à l'état non chargé de façon radiale au moins aussi loin que la déformation (12).

5. Traversée murale (1) selon l'une quelconque des revendications 1 à 4, **caractérisée en ce que** le corps de l'élément de traversée murale (2) comporte un orifice d'insertion (25) qui entoure un débouché de canal de fluide.

6. Traversée murale (1) selon la revendication 5, **caractérisée en ce que** l'orifice d'insertion (25) de l'élément de traversée murale (2) présente une surface d'attaque de couple (26).

7. Traversée murale (1) selon l'une quelconque des revendications 1 à 5, **caractérisée en ce que** le corps de l'élément de traversée murale (2) comporte une partie intérieure (6) et une partie extérieure (7), dans laquelle la partie intérieure (6) présente un canal de fluide (22) et des géométries de raccordement (23, 24) destinées au canal de fluide et la partie extérieure (7) présente la géométrie de fixation.

8. Traversée murale (1) selon la revendication 7, **caractérisée en ce que** la partie intérieure (6) et la partie extérieure (7) de l'élément de traversée murale (2) sont assemblées l'une à l'autre par une liaison par encliquetage (18, 20).

9. Traversée murale (1) selon la revendication 7 ou 8, **caractérisée en ce que** la partie intérieure (6) et la partie extérieure (7) de l'élément de traversée murale (2) sont assemblées l'une à l'autre de manière solidaire en rotation.

10. Traversée murale (1) selon l'une quelconque des revendications 7 à 9, **caractérisée en ce que** la butée (8) de l'élément de traversée murale (2) est agencée au niveau de la partie intérieure (6).

11. Traversée murale (1) selon la revendication 1, **caractérisée en ce que** le contour intérieur suit au moins par endroits un cercle, le cercle ayant un diamètre qui est adapté à un diamètre du tronçon formant support (11).
